# EUROPEAN PATENT SPECIFICATION

(11) **EP 2 193 283 B1**
(45) Date of publication and mention of the grant of the patent: **20.03.2013**
(21) Application number: 07818254.0
(22) Date of filing: 19.09.2007
(51) Int. Cl.: F16D 65/14

(54) **LOCKING DEVICE**
VERRIEGELUNGSVORRICHTUNG
DISPOSITIF DE VERROUILLAGE

(43) Date of publication of application: 09.06.2010
(73) Proprietor: AB SKF, 415 50 Göteborg (SE)
(72) Inventor: DUITS, Johannes, Andrianus, Maria, NL-2411 ZK Bodegraven (NL); JEHLE, Thomas, 79618 Rheinfelden (DE)
(74) Representative: Burö, Sven Peter
(86) International application number: PCT/EP2007/008159
(87) International publication number: WO 2009/036787

(56) References cited:
- WO-A-2005/111458
- US-A- 4 266 635
- US-B2- 6 899 212

## Description

### TECHNICAL FIELD

The present invention relates to a locking device for radially locking a rotatable cylindrical element, such as an axle.

### BACKGROUND ART

Linear actuators are used to move an object along a straight line, either between two end points or to a defined position. Some linear actuators are driven by electricity.

Electrically driven linear actuators normally incorporate a rotating motor and some kind of transmission means to convert the relatively high-speed rotating motor to a low speed linear motion. This transmission means may incorporate a gear box and/or a screw shaft. One common type of linear actuator incorporates a screw shaft with a nut running thereon. The screw shaft extends over the full length of the actuator and sets the operating length of the actuator. Since the nut is held in a non-rotatable state, the nut will be displaced when the screw shaft is rotated by a motor. The nut may incorporate rolling elements, such as balls or rollers, between the screw shaft and the nut. This will allow for a high efficiency actuator with high load transfer and long life. The nut may also engage directly with the screw shaft, i.e. a sliding screw design. In this case, the nut is preferably made of a plastic material.

Depending on the type of linear actuator and the gear ratio in the actuator, the motor may be self-locking, i.e. an external force applied to the actuator will not rotate the motor when the motor is not powered. One example of a self-locking linear actuator is the type using a sliding nut or screw; another type uses a motor with a high ratio gear box. In these types, the force applied on the linear actuator will not be able to rotate the motor since the gear ratio will step up the holding force of the motor with the gear ratio factor. Internal friction in the sliding screw or nut will also provide a holding force.

Linear actuators using a ball or roller screw are sometimes not self-locking, depending on the low internal friction. Such linear actuators may comprise some kind of locking means in order to hold the linear actuator in a required position. The locking means may e.g. be a friction brake of some kind, e.g. a disc brake acting on a separate brake disc or a brake pad acting on the motor or linear actuator directly. In one type of brake, the brake pad is forced into braking action by a power means, e.g. an electromagnet pushing or pulling the brake pad to the brake surface. In another type of brake, the brake pad is applied with a spring and then released from the braking action by a power means, e.g. an electromagnet pushing or pulling the brake pad from the brake surface.

It is also possible to apply a voltage to the motor in order to hold the position of the motor, even though this method should only be used for short periods due to heat generated in the motor.

All these brake devices require rather substantial power consumption in order to hold at least one of the brake states, i.e. applied brake or non-applied brake.

In US 6899212, a device for holding a vehicle wheel against rotation on an inclined surface is disclosed. The device includes a first component supported for rotation about a first axis and having a first surface. The device further includes a second component supported for angular displacement relative to a horizontal plane having a second surface inclined at an acute angle relative to the first surface and forming a space in between. A roller is located in this space, and produces a one-way drive connection between the first surface and the second surface in response to angular displacement of the second component relative to the horizontal plane.

There is still room for improvements.

### DISCLOSURE OF INVENTION

An object of the invention is to provide a locking device that requires low power to engage, that is easy and cost-effective to produce, and that can be mounted in any required position.

With a locking device for radially locking a rotatable cylindrical element in a first direction of rotation, where the locking device comprises a roller element and at least a first inclined surface and where the locking device is arranged to be positioned in relation to a cylindrical surface around the cylindrical element in such a way that the distance between a starting point of the first inclined surface and the axle surface is larger than the diameter of the roller element and that the distance between an end point of the first inclined surface and the axle surface is smaller than the diameter of the roller element, the object of the invention is achieved in that the locking device comprises means to selectively enable the roller element to be distanced from the cylindrical surface.

The means to selectively enable the roller element to be distanced from the cylindrical is a lifting device, which is activated to lift the roller element from the cylindrical surface in order to place the locking device in a released state. In the context of this patent specification, the verb 'lift' is understood to mean any distancing action that causes the roller element to be released from the cylindrical surface. By lifting the roller element from the cylindrical surface, the cylindrical element can rotate freely in any direction. Since the power required to lift the roller element is relatively low, a disengageable locking device with low energy consumption is obtained.

According to the invention, the lifting device is a magnet. This allows the roller element to be lifted in a contactless manner. The advantage of this is that the locking device can be shielded in order to improve reliability. The lifting device is in one embodiment an electromagnet. By using an electromagnet, the engagement and disengagement of the lifting device is improved. Another advantage of using an electromagnet is that the induction of the coil of the electromagnet can be measured. This makes it possible to detect if a roller element is actually being lifted by the lifting device or not. This will improve the reliability of the locking device.

The object of the invention is further achieved in that the locking device comprises a spring element to force the roller element towards the cylindrical surface when the lifting device is disengaged. This allows for the locking device to be mounted in any required position. When the locking device comprises such a spring element, the lifting power of the lifting device additionally acts to overcome the force exerted on the roller element by the spring element, so that the roller element can be lifted from the cylindrical surface. In the case where the inclined surface or surfaces and the lifting device are positioned at "six o'clock", the lifting device need only overcome the spring force, as gravity will cause the roller element to be released from the cylindrical surface.

To enable radial locking of the cylindrical element in a second direction of rotation, the locking device preferably comprises a second inclined surface. The second inclined surface is suitably positioned opposite from the first inclined surface relative to a radial centreline of the device and is likewise positioned such that the distance between a starting point of the second inclined surface and the axle surface is larger than the diameter of the roller element and that the distance between an end point of the second inclined surface and the axle surface is smaller than the diameter of the roller element.

Thus, a locking device is provided which can radially lock a rotatable cylindrical element in a clockwise and a counter-clockwise direction. The device is, moreover, self-locking and requires low power to engage and disengage. The locking device can take up a high locking force, and the locking action will increase when a higher force is applied. The locking device is further relatively easy and cost-effective to produce, since it contains few parts. This is advantageous in that a locking device that is compact can be obtained.

In an advantageous further development of the invention, the inclined surfaces are symmetrical around a radial centreline of the locking device. By using symmetrical inclined surfaces, the locking action will be the same regardless of which locking direction is used.

In an advantageous further development of the invention, the locking device comprises means to detect when the roller element is in a lifted state. By doing this, it is possible to detect that the locking device is actually in a released state. This is advantageous in that the actual state of the locking device can be detected. If e.g. the lifting device malfunctions or the roller element sticks to the inclined surface, the roller element may not be lifted even though a signal is sent to activate the lifting device. The reliability of the locking device is thus further improved.

In an advantageous further development of the invention, the locking device comprises means to detect if the locking device is in a first or second locked state. By doing this, it is possible to detect in which rotational direction the cylindrical element was rotating when the locking device was activated. This makes it possible to decide in which direction the cylindrical element is to be rotated in order to release the cylindrical element and thus to place the locking device in a released state. Rotating the cylindrical element in the wrong direction may damage the locking device or the device driven by the cylindrical element. The reliability of the locking device is thus further improved.

In an advantageous further development of the invention, the cylindrical element of the locking device comprises a tubular element and a friction coupling. This reduces the risk of overloading the locking device, and at the same time allows the use of the locking device as an emergency brake. The friction coupling can be set to slip at a predefined force.

In an advantageous further development of the invention, the locking device comprises a second roller element, two further inclined surfaces and a second lifting device. This allows a symmetric load on the axle element which is advantageous in that the wear of the mechanical system is reduced.

### BRIEF DESCRIPTION OF DRAWINGS

The invention will be described in greater detail in the following, with reference to the embodiments that are shown in the attached drawings, in which
- Fig. 1: shows, in a frontal view, the geometry of a part of a first embodiment of a locking device according to the invention,
- Fig. 2: shows the first embodiment of a locking device according to the invention in a released state,
- Fig. 3: shows the first embodiment of a locking device according to the invention in an engaged state,
- Fig. 4: shows the first embodiment of a locking device according to the invention in a locked state,
- Fig. 5: shows a second embodiment of the locking device according to the invention in an engaged state, and
- Fig. 6: shows the second embodiment of the locking device according to the invention in a locked state.

### MODES FOR CARRYING OUT THE INVENTION

The embodiments of the invention with further developments described in the following are to be regarded only as examples and are in no way to limit the scope of the protection provided by the patent claims.

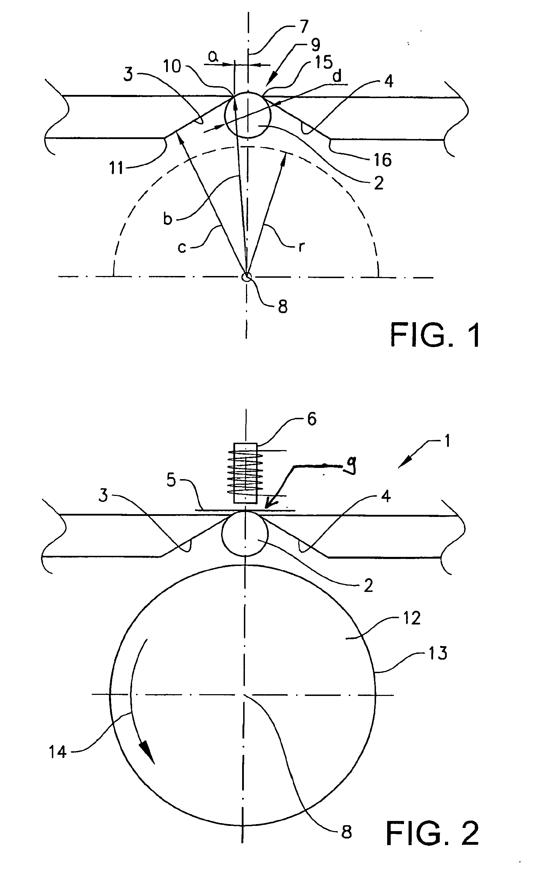

Fig. 1 shows the geometry of a part of a first embodiment of a locking device according to the invention. Figs. 2 to 4 show the same locking device, where the locking device is in a released, an engaged and a locked state, respectively. The locking device 1 comprises a roller element 2, a first inclined surface 3 and a second inclined surface 4. The locking device further comprises a spring element 5 and a lifting device 6. The lifting device is an electromagnet. In Fig. 1, the spring element and lifting device are not shown.

The locking device is adapted to be mounted on a mechanical device comprising a rotatable cylindrical element 12, such as an axle, a hollow axle, a tubular element or the like. The mechanical device may e.g. be a motor, a transmission device, a linear actuator or the like.

In one embodiment, the roller element is completely round, i.e. a ball. In another embodiment, the roller element is a cylinder with a predefined length and a diameter d. The roller element is preferably manufactured in a hard material, e.g. hardened steel, in order to be able to handle the imposed loads without deforming. The exact properties and dimensions are adapted to the defined requirements.

The two inclined surfaces 3, 4 are in one embodiment symmetrical with respect to a radial centreline 7 of the locking device. Thus, the second inclined surface 4 is in this example a mirror image of the first inclined surface 3. The first inclined surface 3 comprises a starting point 10 and an end point 11. The second inclined surface 4 comprises a starting point 15 and an end point 16. The inclined surface between the starting point 10, 15 and the end point 11, 16 is preferably straight, but slightly concave or convex surfaces are also conceivable, as long as an appropriate locking action can be achieved. The inclined surface is suitably shaped in an axial direction to fit the geometry of the roller element used. If the roller element is a ball, the inclined surface is preferably provided with a groove or the like in order to hold the ball in an axial manner and also to better distribute the load from the ball to the inclined surface. If the roller element is a cylinder, the inclined surface is preferably straight in the axial direction and is suitably adapted to fit the roller element.

The starting point 10 is positioned at the distance a from the radial centreline 7. The distance a is preferably smaller than half of the diameter of the roller element. In this way, a central section 9 between the starting points of the two inclined surfaces is obtained. In one embodiment, the central section 9 is an opening that preferably is smaller than the roller element. The roller element will thus bear on the starting points of the inclined surfaces when the roller element is in a released state. The size of the central section 9 can also be larger than the roller element. In this case, another retaining means is used to retain the roller element in the locking device. The central section 9 may also be a section connecting the starting points of the inclined surfaces. The central section is in this case provided with a recess wherein the roller element will rest when the roller element is lifted, i.e. when the locking device is in a released state. Depending on the material used in the inclined surfaces, it may be advantageous to use another material in the central section. When the inclined surfaces are made of steel and the lifting device is an electromagnet, the central section is preferably made of a non-magnetic material, such as plastic or a non-magnetic metal. The advantage of having a central section connecting the starting points is that the locking device will be shielded, which will improve the reliability. The central section may also be incorporated with the lifting device.

The starting point 10 is positioned at a distance b from the centre axis 8 of the locking device. The end point 11 is positioned at a distance c from the centre axis 8 of the locking device. The distance b is larger than the diameter d of the roller element added to the radius r of the axle to which the locking device is adapted to be mounted. Thus, the distance from the starting point 10 to the axle surface 13 is larger than the diameter d of the roller element. The distance c is smaller than the diameter d of the roller element added to the radius r of the axle to which the locking device is adapted to be mounted. Thus, the distance from the end point 11 to the axle surface 13 is smaller than the diameter d of the roller element. The distance between the inclined surface 3 and the axle surface 13 will decrease in the direction towards the end point 11.

Fig. 2 shows a locking device mounted to an axle 12. The centre axis 8 of the locking device is mounted so that it coincides with the centre axis of the axle. When the roller element 2 is held in the central section 9 with a lifting device 6, the axle is free to rotate and the roller element is not in contact with the axle surface 13. This state is called the released state.

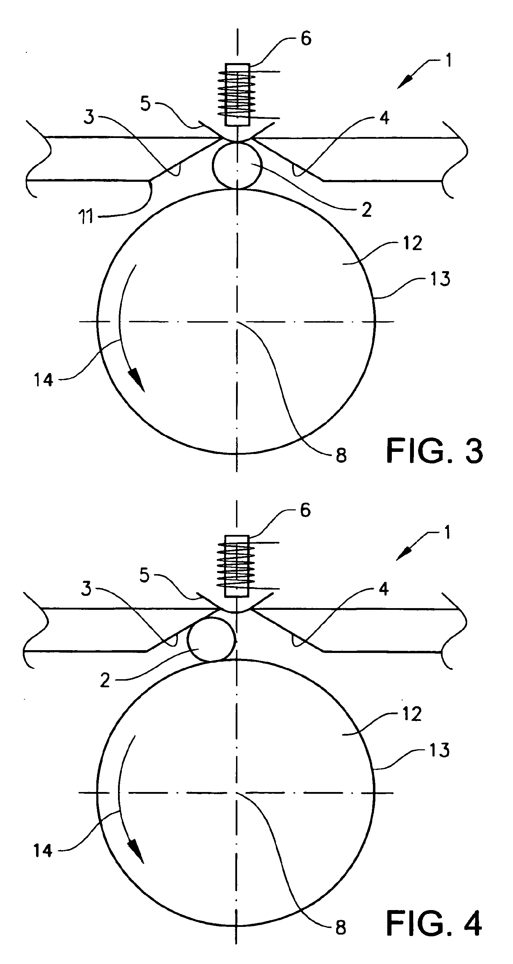

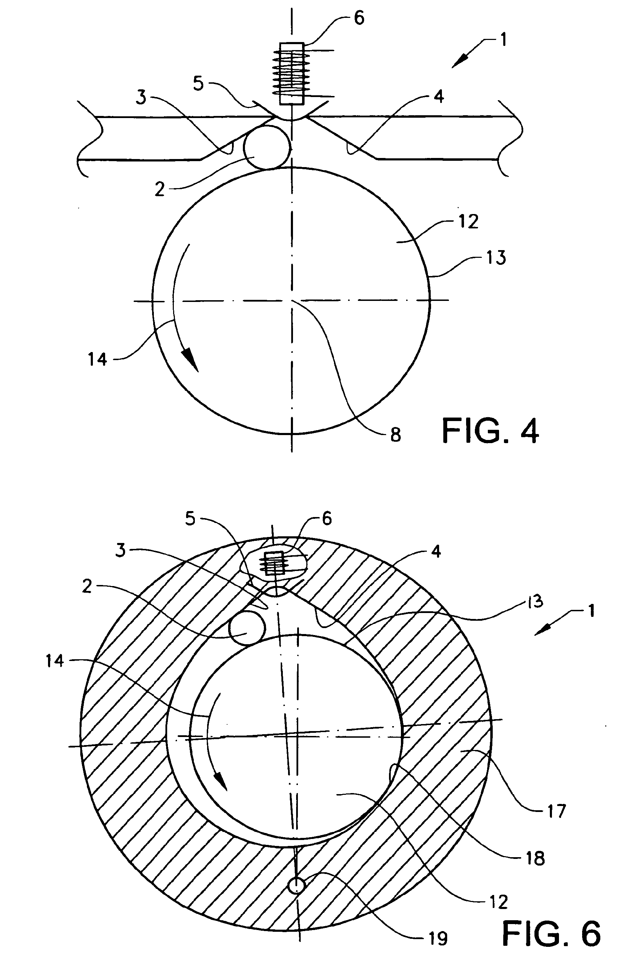

When the lifting device is disengaged, the roller element will be pushed down towards the axle surface by the spring element 5. The roller element will in this case be forced to bear on the axle surface 13, as is shown in fig. 3. When the axle rotates, the roller element will be forced to follow the rotational direction of the axle. In this example, the rotation is in the counter-clockwise direction as indicated by arrow 14. Due to the rotation, the roller element will be forced in the direction towards the end point 11. Since the distance between the inclined surface 3 and the axle surface 13 decreases in this direction, the roller element will be squeezed between the inclined surface 3 and the axle surface 13. The friction between the roller element and the inclined surface will prevent the roller element from rotating, and the friction between the roller element and the axle surface will prevent the axle from rotating. The axle is thus in a locked state as shown in fig. 4.

The surface of the inclined surface, the roller element and/or the axle surface may be treated in order to increase the friction of that surface. Such a treatment may be some kind of mechanical surface conditioning, such as etching, grinding or the like, or by applying a friction material to the surface, such as a plastic or rubber material.

When the axle is locked, or when the roller element is engaged in order to lock the axle, it is of advantage to, at the same time, disengage or decrease the driving power applied to the motor. In this way, damage to the motor, the gear box and/or the device driven by the motor can be avoided. One way of detecting when the axle is locked is to monitor the current applied to the motor. A current sensing device measures the current through the motor. When the motor is blocked, i.e. cannot rotate, the current consumption of the motor will increase. When the current increases rapidly, preferably in connection with the engagement of the roller element, i.e. disconnection of the power to the lifting device, the axle will be in the locked state. This detection method is suitable when the drive current and the blocking current for the motor differs enough, e.g. by a factor 2 or more.

Another way of detecting a locked axle is to use a rotational sensor that measures the rotation of the motor. When the sensor indicates that the rotation of the motor is stopped, preferably in connection with the engagement of the roller element, the axle will be in the locked state.

This type of locking action of the axle has the advantage that it is passive, i.e. there is no power requirement of the locking device to keep the axle in a locked state. The locking action will thus be self-powered and will not release by itself.

For most applications, where the locking device or a motor with a locking device may be positioned in any arbitrary position, a spring element 5 will ensure that the roller element 2 will be in contact with the axle surface when the roller element is in the engaged state.

In order to release the axle from the locked state, i.e. to unlock the axle, the motor is rotated somewhat in the opposite direction. In the example described here, the motor will be rotated in the clockwise direction. At the same time, the power to the lifting device 6 is applied. When the motor is reversed, the roller element will be forced out of the locked state and will rotate on the axle surface towards the central section 9. When the roller element is released from the locked state, it will be attracted by the lifting device 6 and will thus be lifted from the axle surface 13 to the released state. When the roller element 2 is in the released state, the motor can be rotated in any direction and the device driven by the motor can be driven to the required position.

The spring element 5 is in this example a flat blade spring, but other spring elements can be used as well. These may include different types of springs or other resilient elements, such as rubber or plastic. The spring element 5 is dimensioned so that the roller element 2 will be pushed towards the axle surface 13 regardless of the mounting position of the locking device, when the lifting device is not powered. When the lifting device is powered, the lifting device 6 will overcome the force of the spring element 5 so that the roller element 2 is attracted towards the lifting device 6, regardless of the mounting position of the locking device. The spring element will push the roller element against the axle surface 13. In order to do this, the spring element may have to extend below the starting point 10. This may be done through apertures or recesses in the locking device, or by positioning the spring element at the end surfaces of the roller element.

The lifting device 6 is an electromagnet. One advantage of using an electromagnet is that a contactless lifting device is obtained. The roller element 2, the inclined surfaces 3, 4 and the spring element 5 may be encased in order to prevent debris or lose parts from entering the locking device. Even small contaminations may deteriorate the performance of the locking device. By encasing the locking device and using an outer lifting device acting on the roller element through the encasing, a reliable locking device is obtained. The electromagnet is positioned at the central section 9, close to the position in which the roller element rests when it is in the released state.

The lifting device may also comprise a permanent magnet that is displaced mechanically between a position in which the roller element is attracted towards the permanent magnet and a position in which the permanent magnet does not attract the roller element. The permanent magnet can be moved between these two positions in different ways, e.g. by using a lever or a rotational element.

The locking device is preferably circular. Fig. 5 shows an embodiment of a circular locking device, with a circular housing 17. The locking device is placed around an axle 12 and by using a circular locking device, a compact locking solution is obtained. The forces that are to be taken up by the locking device are distributed in an optimal way using a circular locking device. Depending on the use of the locking device, other shapes are also conceivable.

In a second embodiment of the invention, the locking device is resiliently suspended to the mechanical device incorporating the cylindrical element. This may e.g. be a motor with an axle as the cylindrical element. The resilient means that suspend the housing (not shown) may be springs, a rubber or plastic material or the like. Preferably, the resilient means are relatively stiff. In the engaged state, as shown in Fig. 5, the resilient suspension will position the locking device symmetricaly around the axle 12, as in the examples shown above for the fixedly attached locking device.

Fig. 6 shows the locking device according to the second embodiment in a locked state. When the roller element 2 is pressed towards the axle by the spring element 5, and the axle 12 rotates in the direction shown by arrow 14, the roller element will roll on the axle and move towards the inclined surface 3. When the roller element touches the inclined surface, the roller element will push the inclined surface, and thus the housing, away from the axle surface 13, since the housing is resiliently suspended. The housing will stop when the inner surface 18 of the housing bears on the axle surface 13. This action will put the locking device in a locked state. In this embodiment, the brake area acting on the axle is greater than in the first embodiment, since the axle is prevented from rotation not only by the roller element area but also by the area between the axle and the inner surface 18 of the housing.

Since the housing is resiliently suspended, it is of importance that the housing, and thus the locking device, is rather fixedly positioned in a rotational manner. Otherwise, the complete locking device will rotate around the axle which would at least make the rotational play greater. One way to prevent the locking device from rotating but still allow the locking device to be resiliently suspended is to mount the locking device on a hinge pin 19. The hinge pin will prevent the locking device from rotating, but will allow the locking device to pivot slightly so that the inner surface of the housing can bear against the axle when the locking device is in the locked state.

In one development of the locking device, a detection means is used to detect when the roller element 2 is in the released state. Such a detection means may be a switch that is toggled by the roller element when it enters the released state. It may also be an optical sensor that detects when a light beam is interrupted by the roller element. When the lifting device is an electromagnet comprising a coil, it is possible to measure the induction in the coil. The induction will differ when the roller element is close to the coil compared to when the roller element is in a locked position. This method is simple and reliable, since a broken switch may give the same signal as when the roller element is in the released state.

By detecting that the roller element is in the released state after it has been released from the locked state, the power can be applied to the motor without any risk of damaging the motor or the locking device. This could be the case if the roller element was not in the released state even though it was released from a locked state. Applying power to the motor when the roller element is in the engaged state, rolling on the axle surface, will force the roller element into a locked state again.

In an embodiment of the locking device, the locking device is provided with detection means to detect in which locked state the roller element is. The roller element is in a first locked position when the roller element is trapped between the first inclined surface 3 and the axle surface and in a second locked position when the roller element is trapped between the second inclined surface 4 and the axle surface. By detecting in which locked position the roller element is, the rotational direction in which to drive the motor in order to release the roller element can be decided.

When the motor is provided with a rotational sensor, the detection of which locked position the roller element is in can be done by measuring the rotational direction of the motor when the axle locks. A control unit connected to the sensor and driving the motor can store the last direction of the motor and will thus know in which direction to drive the motor in order to release the locking device. By using the rotational sensor information, the control unit can also selectively drive the motor the required rotational angle in order to release the locking device. The rotational angle to release the locking device will depend on the geometry of the locking device, but may e.g. be in the range of 5 to 15 degrees for the described example. If the motor is to be rotated in the direction it was rotating when the axle was locked, a small reverse rotation will release the locking device and the motor can then be rotated in the desired direction. This will enable a more or less play free operation of the motor. With a gear ratio of the system driven by the motor, the play will be further reduced.

One application in which the locking device may be used is a linear actuator. An electrically powered linear actuator is provided with a motor. Some linear actuators, e.g. the types using a sliding screw or nut, may be self-locking when the motor is disengaged. Some types, e.g. the ones provided with a screw or nut using balls or rollers, may have such a low internal friction so that they are not self-locking. The locking device according to the invention is suitable for these types. Linear actuators of this kind may be either of the type having a motor mounted at one end of linear actuator, i.e. at a rear end of the screw or longitudinal nut, or of the type where the motor is mounted around the screw or longitudinal nut. The locking device according to the invention is suitable for both types.

The motor may be driven by an external control unit. The control unit may be any kind of suitable control unit, such as an analogue or digital control unit. The linear actuator may have a standard PLC compatible I/O-interface using discrete signal lines or may have an integrated standard fieldbus interface. Most commonly, a standard PLC compatible I/O-interface will be used for the communication between the motor and the control unit may. Two signal lines can be used for the commands "clockwise rotation" and "counter-clockwise rotation". These signals may be either low-level, when a separate power connection is provided, or high level, when the signals is used to drive the motor directly. This input signal may also comprise information of the motor speed, i.e. how fast the motor should rotate. Depending on the type of motor, a voltage setting the speed or a modulated signal may be used as input signal.

In a further embodiment of the invention, the locking device comprises a second roller element, a second set of inclined surfaces, a second spring element and a second lifting device (not shown). This second set of locking elements is preferably arranged at the side of the axle element opposite from the first set of locking elements, i.e. in a symmetrical manner. The second roller element is used in parallel with the first roller element 2, i.e. the two roller elements are released and engaged at the same time. One advantage of using two sets of locking elements is that a symmetric load on the axle element is obtained, which will reduce wear on the axle element, bearings etc. caused by an uneven load. Another advantage is that the total load which the locking device can handle may be increased. The second set of locking elements is preferably identical to the first set of locking elements. A further advantage of using a second set of locking elements is that the security of the locking device increases, should one roller element fail to engage for some reason.

In a further embodiment, the locking device comprises more sets of locking elements, positioned symmetrically around the axle element. This may be advantageous for axle elements with larger diameters, in order to increase the total force that the locking device can handle. Depending on the size of the axle element and the load carried by that axle element, typically three or four sets of locking elements positioned around the axle element may be appropriate.

In a further embodiment of the inventive locking device, the axle element 12 is provided with an outer tubular element (not shown). This tubular element is attached to the axle element, so that the outer surface of the tubular element acts as the contact surface for the roller element. The tubular element may be a ring shaped element with a width approximately the same as the roller element or may be a longer tubular element. The tubular element is attached to the axle element with some type of friction coupling.

The friction coupling can be e.g. a mechanical clamp with a predefined clamping force that allows the tubular element to slip on the axle element if a force larger than a predefined force is applied to the axle element when the roller element is engaged. The friction coupling may also comprise a breakpin or the like that will break at a predefined load, allowing the tubular element to slip with a predefined friction coefficient. This will prevent the locking device and/or the axle element from being damaged if an excessive force is applied to the system. The friction coupling can also comprise a friction material applied between the axle element and the tubular element. The friction material will connect the axle element and the tubular element in a fixed manner when the applied force is below a predefined value, but will allow the tubular element to slip on the axle element when a larger force is applied. The friction material may be a rigid friction material such as the material used in brake linings, or may be a rubber or compound that slips or becomes viscous at a predefined load and/or temperature.

One purpose of the friction coupling is to prevent an overload on the locking device. Another purpose is to provide a brake function. This is especially advantageous if the roller element is engaged when the axle element is rotating at a high speed. Such an engagement action may be performed inadvertently if part of the system does not function properly and an engagement at a high speed is thus allowed, or may be performed as a security stop if a malfunction is detected somewhere in the system and an emergency stop is required. With the friction coupling, a controlled emergency stop can be performed without breaking the mechanical system. The invention is not to be regarded as being limited to the embodiments described above, a number of additional variants and modifications being possible within the scope of the subsequent patent claims.

### REFERENCE NUMERALS

- 1:: Locking device
- 2:: Roller element
- 3:: First inclined surface
- 4:: Second inclined surface
- 5:: Spring element
- 6:: Lifting device
- 7:: Radial centreline of locking device
- 8:: Centre axis of locking device
- 9:: Central section
- 10:: Starting point of first inclined surface
- 11:: End point of first inclined surface
- 12:: Cylindrical element
- 13:: Cylindrical surface
- 14:: Rotational direction
- 15:: Starting point of second inclined surface
- 16:: End point of second inclined surface
- 17:: Housing
- 18:: Inner surface of housing
- 19:: Hinge pin
- a:: Distance between starting point and radial centreline
- b:: Distance between starting point and centre axis
- c:: Distance between end point and centre axis
- d:: Diameter of roller element
- r:: Distance between cylindrical surface and centre axis

## Claims

1. Locking device (1) to radially lock a rotatable cylindrical element (12), the locking device (1) comprising a roller element (2) and a first inclined surface (3), where the locking device (1) is arranged to be positioned in relation to a cylindrical surface (13) around the cylindrical element (12) in such a way that the distance between a starting point (10) of the first inclined surface (3) and the cylindrical surface (13) is larger than the diameter of the roller element (2) and that the distance between an end point (11) of the first inclined surface (3) and the cylindrical surface (13) is smaller than the diameter of the roller element (2), **characterized in that** the locking device (1) further comprises:
- a lifting device (6), being a magnet or an electromagnet, which lifting device (6) is activated to lift the roller element (2) from the cylindrical surface (13) in order to place the locking device (1) in a released state, and;
- a spring element (5) to force the roller element (2) towards the cylindrical surface (13) when the lifting device (6) is disengaged.

2. Locking device (1) according to claim 1, **characterized in that** the locking device (1) further comprises a second inclined surface (4), oppositely oriented from the first inclined surface (3), the second inclined surface (4) being positioned such that the distance between a starting point (15) of the second inclined surface (4) and the cylindrical surface (13) is larger than the diameter of the roller element (2) and that the distance between an end point (16) of the second inclined surface (4) and the cylindrical surface (13) is smaller than the diameter of the roller element (2).

3. Locking device (1) according to claim 2, **characterized in that** the first inclined surface (3) and second inclined surface (4) are symmetrical about a centreline (7) of the locking device.

4. Locking device (1) according to any of the preceding claims, **characterized in that** the locking device (1) comprises means to detect when the roller element (2) is in a lifted state.

5. Locking device (1) according to any of the preceding claims, **characterized in that** the locking device (1) comprises means to detect if the locking device is in a first or second locked state.

6. Locking device (1) according to any of claims 1 to 5, **characterized in that** the cylindrical surface (13) is a surface of the cylindrical element (12).

7. Locking device (1) according to any of claims 1 to 5, **characterized in that** the cylindrical surface (13) is a surface of a tubular element, which tubular element is coupled to the cylindrical element (12) by means of a friction coupling.

8. Locking device (1) according to any of the preceding claims, **characterized in that** locking device (1) comprises a hinge pin (19) on which the locking device (1) can pivot.

9. Locking device (1) according to any of claims 1 to 8, **characterized in that** the locking device (1) comprises at least a second roller element, at least second means to selectively enable the second roller element to be distanced from the cylindrical surface (13) and at least a first additional inclined surface.

10. Locking device (1) according to claim 9, **characterized in that** the locking device (1) further comprises at least a second additional inclined surface, which second additional inclined surface is positioned opposite from the first additional inclined surface relative to a radial centreline (1) of the locking device (1).

11. Linear actuator, comprising a locking device (1) according to any of claims 1 to 10.

## Patentansprüche

1. Sperrvorrichtung (1) zum radialen Sperren eines drehbaren zylindrischen Elements (12), wobei die Sperrvorrichtung (1) ein Rollenelement (2) und eine erste geneigte Fläche (3) umfasst, wobei die Sperrvorrichtung (1) dazu angeordnet ist, bezüglich einer zylindrischen Fläche (13) um das zylindrische Element (12) herum derart positioniert zu werden, dass der Abstand zwischen einem Anfangspunkt (10) der ersten geneigten Fläche (3) und der zylindrischen Fläche (13) größer ist als der Durchmesser des Rollenelements (2) und dass der Abstand zwischen einem Endpunkt (11) der ersten geneigten Fläche (3) und der zylindrischen Fläche (13) kleiner ist als der Durchmesser des Rollenelements (2),
**dadurch gekennzeichnet, dass** die Sperrvorrichtung (1) ferner Folgendes umfasst:
- eine Hebevorrichtung (6), die ein Magnet oder ein Elektromagnet ist, wobei die Hebevorrichtung (6) dahingehend aktiviert wird, das Rollenelement (2) von der zylindrischen Fläche (13) zu heben, um die Sperrvorrichtung (1) in einen freigegebenen Zustand zu bringen, und
- ein Federlement (5) zum Drücken des Rollenelements (2) zur zylindrischen Fläche (13) hin, wenn die Hebevorrichtung (6) ausgerückt ist.

2. Sperrvorrichtung (1) nach Anspruch 1, **dadurch gekennzeichnet, dass** die Sperrvorrichtung (1) ferner eine zweite geneigte Fläche (4) umfasst, die zur ersten geneigten Fläche (3) entgegengesetzt ausgerichtet ist, wobei die zweite geneigte Fläche (4) derart positioniert ist, dass der Abstand zwischen einem Anfangspunkt (15) der zweiten geneigten Fläche (4) und der zylindrischen Fläche (13) größer ist als der Durchmesser des Rollenelements (2) und dass der Abstand zwischen einem Endpunkt (16) der zweiten geneigten Fläche (4) und der zylindrischen Fläche (13) kleiner ist als der Durchmesser des Rollenelements (2).

3. Sperrvorrichtung (1) nach Anspruch 2, **dadurch gekennzeichnet, dass** die erste geneigte Fläche (3) und die zweite geneigte Fläche (4) zu einer Mittellinie (7) der Sperrvorrichtung symmetrisch sind.

4. Sperrvorrichtung (1) nach einem der vorhergehenden Ansprüche, **dadurch gekennzeichnet, dass** die Sperrvorrichtung (1) Mittel zum Erfassen, wann sich dass Rollenelement (2) in einem angehobenen Zustand befindet, umfasst.

5. Sperrvorrichtung (1) nach einem der vorhergehenden Ansprüche, **dadurch gekennzeichnet, dass** die Sperrvorrichtung (1) Mittel zum Erfassen, ob sich die Sperrvorrichtung in einem ersten oder zweiten gesperrten Zustand befindet, umfasst.

6. Sperrvorrichtung (1) nach einem der Ansprüche 1 bis 5, **dadurch gekennzeichnet, dass** die zylindrische Fläche (13) eine Fläche des zylindrischen Elements (12) ist.

7. Sperrvorrichtung (1) nach einem der Ansprüche 1 bis 5, **dadurch gekennzeichnet, dass** die zylindrische Fläche (13) eine Fläche eines röhrenförmigen Elements ist, wobei das röhrenförmige Element über eine Reibungskupplung mit dem zylindrischen Element (12) gekoppelt ist.

8. Sperrvorrichtung (1) nach einem der vorhergehenden Ansprüche, **dadurch gekennzeichnet, dass** die Sperrvorrichtung (1) einen Drehzapfen (19) umfasst, auf dem die Sperrvorrichtung (1) schwenken kann.

9. Sperrvorrichtung (1) nach einem der Ansprüche 1 bis 8, **dadurch gekennzeichnet, dass** die Sperrvorrichtung (1) mindestens ein zweites Rollenelement, mindestens zweite Mittel zum gezielten Ermöglichen, dass das zweite Rollenelement von der zylindrischen Fläche (13) beabstandet wird, und mindestens eine erste zusätzliche geneigte Fläche umfasst.

10. Sperrvorrichtung (1) nach Anspruch 9, **dadurch gekennzeichnet, dass** die Sperrvorrichtung (1) ferner mindestens eine zweite zusätzliche geneigte Fläche umfasst, wobei die zweite zusätzliche geneigte Fläche gegenüber der ersten zusätzlichen geneigten Fläche bezüglich einer radialen Mittellinie (7) der Sperrvorrichtung (1) positioniert ist.

11. Linearantrieb, der eine Sperrvorrichtung (1) nach einem der Ansprüche 1 bis 10 umfasst.

## Revendications

1. Dispositif de verrouillage (1) pour verrouiller radialement un élément cylindrique rotatif (12), le dispositif de verrouillage (1) comprenant un élément de rouleau (2) et une première surface inclinée (3), le dispositif de verrouillage (1) étant agencé pour être positionné par rapport à une surface cylindrique (13) autour de l'élément cylindrique (12), de telle sorte que la distance entre un point de départ (10) de la première surface inclinée (3) et la surface cylindrique (13) soit supérieure au diamètre de l'élément de rouleau (2) et que la distance entre un point terminal (11) de la première surface inclinée (3) et la surface cylindrique (13) soit inférieure au diamètre de l'élément de rouleau (2),
**caractérisé en ce que** le dispositif de verrouillage (1) comprend en outre :
- un dispositif de levage (6) qui est un aimant ou un électroaimant, lequel dispositif de levage (6) est activé pour soulever l'élément de rouleau (2) de la surface cylindrique (13) afin de placer le dispositif de verrouillage (1) dans un état libéré, et ;
- un élément de ressort (5) pour forcer l'élément de rouleau (2) en direction de la surface cylindrique (13) lorsque le dispositif de levage (6) est désengagé.

2. Dispositif de verrouillage (1) selon la revendication 1, **caractérisé en ce que** le dispositif de verrouillage (1) comprend en outre une deuxième surface inclinée (4), orientée de manière opposée à la première surface inclinée (3), la deuxième surface inclinée (4) étant positionnée de telle sorte que la distance entre un point de départ (15) de la deuxième surface inclinée (4) et la surface cylindrique (13) soit supérieure au diamètre de l'élément de rouleau (2) et que la distance entre un point terminal (16) de la deuxième surface inclinée (4) et la surface cylindrique (13) soit inférieure au diamètre de l'élément de rouleau (2).

3. Dispositif de verrouillage (1) selon la revendication 2, **caractérisé en ce que** la première surface inclinée (3) et la deuxième surface inclinée (4) sont symétriques par rapport à une ligne médiane (7) du dispositif de verrouillage.

4. Dispositif de verrouillage (1) selon l'une quelconque des revendications précédentes, **caractérisé en ce que** le dispositif de verrouillage (1) comprend des moyens pour détecter lorsque l'élément de rouleau (2) est dans un état soulevé.

5. Dispositif de verrouillage (1) selon l'une quelconque des revendications précédentes, **caractérisé en ce que** le dispositif de verrouillage (1) comprend des moyens pour détecter si le dispositif de verrouillage est dans un premier ou deuxième état verrouillé.

6. Dispositif de verrouillage (1) selon l'une quelconque des revendications 1 à 5, **caractérisé en ce que** la surface cylindrique (13) est une surface de l'élément cylindrique (12).

7. Dispositif de verrouillage (1) selon l'une quelconque des revendications 1 à 5, **caractérisé en ce que** la surface cylindrique (13) est une surface d'un élément tubulaire, lequel élément tubulaire est accouplé à l'élément cylindrique (12) au moyen d'un accouplement à friction.

8. Dispositif de verrouillage (1) selon l'une quelconque des revendications précédentes, **caractérisé en ce que** le dispositif de verrouillage (1) comprend un axe d'articulation (19) sur lequel le dispositif de verrouillage (1) peut pivoter.

9. Dispositif de verrouillage (1) selon l'une quelconque des revendications 1 à 8, **caractérisé en ce que** le dispositif de verrouillage (1) comprend au moins un deuxième élément de rouleau, au moins des deuxièmes moyens pour permettre de manière sélective au deuxième élément de rouleau d'être espacé de la surface cylindrique (13) et au moins une première surface inclinée supplémentaire.

10. Dispositif de verrouillage (1) selon la revendication 9, **caractérisé en ce que** le dispositif de verrouillage (1) comprend en outre au moins une deuxième surface inclinée supplémentaire, laquelle deuxième surface inclinée supplémentaire est positionnée de manière opposée à la première surface inclinée supplémentaire par rapport à une ligne médiane radiale (7) du dispositif de verrouillage (1).

11. Actionneur linéaire, comprenant un dispositif de verrouillage (1) selon l'une quelconque des revendications 1 à 10.
